# EUROPÄISCHE PATENTSCHRIFT

(11) **EP 3 659 688 B1**
(45) Veröffentlichungstag und Bekanntmachung des Hinweises auf die Patenterteilung: **23.10.2024**
(21) Anmeldenummer: 19210698.7
(22) Anmeldetag: 21.11.2019
(51) Int. Cl.: B01D 17/04, B01D 17/00, B01D 17/12, B64F 1/28, C10G 33/06, B67D 7/76, B67D 7/34

(54) **KRAFTSTOFFBETANKUNGSANLAGE MIT EINER ZURÜCKHALTEVORRICHTUNG UND VERFAHREN ZUM ZURÜCKHALTEN EINES FREMDFLUIDS AUS EINEM FLUID**
FUEL TANK SYSTEM WITH RETENTION DEVICE AND METHOD FOR RETAINING A FOREIGN FLUID FROM A FLUID
INSTALLATION DE RÉAPPROVISIONNEMENT EN CARBURANT AVEC DISPOSITIF DE RETENTION ET PROCÉDÉ DE RETENTION D'UN FLUIDE ÉTRANGER À PARTIR D'UN FLUIDE

(30) Priorität: 27.11.2018 DE 102018129984
(43) Veröffentlichungstag der Anmeldung: 03.06.2020
(73) Patentinhaber: FAUDI Aviation GmbH, 35260 Stadtallendorf (DE)
(72) Erfinder: LAUBER, Uwe, 35096 Weimar (DE); ADEN, Matthias, 64668 Rimbach (DE)
(74) Vertreter: Patentanwälte Olbricht Buchhold Keulertz

(56) Entgegenhaltungen:
- WO-A1-2012/087382
- WO-A1-2015/195524
- WO-A1-2018/193002
- US-A1- 2014 216 602
- US-B2- 6 641 738
- US-B2- 6 860 972

## Beschreibung

Die Erfindung betrifft eine Kraftstoffbetankungsanlage mit einer Zurückhaltevorrichtung gemäß dem Oberbegriff von Anspruch 1 und ein Verfahren zum Zurückhalten eines Fremdfluids aus einem Fluid nach Anspruch 4.

Aus dem Stand der Technik sind Vorrichtungen und Verfahren zur Abscheidung von Öl aus Wasser oder umgekehrt bekannt, um beispielsweise Wasser von Öl zu reinigen oder Kraftstoffe mit möglichst geringem Wasseranteil bereitstellen zu können. So beschreibt beispielsweise DE 2 303 633 A, wie mit Hilfe eines permeablen Polyurethanschaums eine Koaleszenz bewirkbar ist, sodass eine zunächst vorliegende Dispersion aus Wasser und einem flüssigen Benzinkohlenwasserstoff beim Durchströmen des Polyurethanschaums in zwei Schichten aufgetrennt wird. Hierbei sammelt sich eine der beiden Flüssigkeiten am Polyurethanschaum, wohingegen die andere der beiden Flüssigkeiten durch den Polyurethanschaum hindurchtritt.

Sobald die sich sammelnde Flüssigkeit größere Tröpfchen am Polyurethanschaum bildet, können sich diese lösen und entsprechend ihrer Dichte einschichten, sodass sich eine Flüssigkeitsschicht bildet.

Problematisch hierbei ist, dass große Filtereinheiten mit großen Filterflächen im Verhältnis zum Volumenstrom mit recht teuren Filtermedien erforderlich sind, damit das Fremdfluid aus dem eigentlich Fluid prozesssicher entfernbar ist. Eine solche Koaleszenzeinrichtung beschreibt beispielsweise EP 0 699 462 B1. Ferner offenbart US2014/216602 ein Kraftstoffanlage.

Aufgabe der Erfindung ist es daher, eine kompakte, preiswerte und prozesssichere Möglichkeit zu schaffen, ein Fremdfluid aus einem Fluid zu entfernen, wobei auch große Flüssigkeitsvolumen behandelbar sind.

Hauptmerkmale der Erfindung sind im Anspruch 1, sowie Anspruch 4 angegeben. Ausgestaltungen sind Gegenstand der Ansprüche 2 bis 3, 5 bis 9 sowie der Beschreibung.

Ein Teil der Erfindung betrifft eine Zurückhaltevorrichtung mit einem Filterelement in einer Fluidleitung, die in einer Strömungsrichtung von einem Fluid enthaltend ein Fremdfluid durchströmbar ist (oder durchströmt ist; dies insbesondere im Betrieb), insbesondere einer Dispersion oder Emulsion. Die Zurückhaltevorrichtung weist eine Volumenstromregelvorrichtung auf, mit welcher der Volumenstrom durch die Fluidleitung regelbar ist (oder geregelt ist; dies insbesondere im Betrieb), und verfügt über eine Sensoreinrichtung, mit welcher der Anteil an Fremdfluid im Fluid bestimmbar ist. Man könnte auch sagen, dass die Sensoreinrichtung dazu ausgestaltet ist, den Anteil an Fremdfluid im Fluid zu bestimmen. Außerdem weist die Zurückhaltevorrichtung eine Regeleinrichtung auf, mit welcher, insbesondere mit deren Regelkreis, der Volumenstrom mit der Volumenstromregelvorrichtung in Abhängigkeit von dem mit der Sensoreinrichtung bestimmten Anteil an Fremdfluid im Fluid regelbar ist (oder geregelt ist; dies insbesondere im Betrieb).

Dies hat den Vorteil, dass in Abhängigkeit des Anteils an Fremdfluid im Fluid eine Anpassung des Volumenstroms ermöglicht wird, dies insbesondere auch automatisiert. Fluid und Fremdfluid bilden insbesondere eine Emulsion. Überraschender Weise lässt sich nämlich bei einer Vielzahl an Filtermaterialien bei geringen Volumenströmen, die für einen Dauerbetrieb eher ungeeignet erscheinen, noch eine zurückhaltende, abscheidende oder koaleszierende Wirkung ausnutzen. Solange hingegen kaum oder kein Fremdfluid enthalten ist, wird auch keine Zurückhaltewirkung benötigt, und das Filterelement kann mit hoher Strömungsgeschwindigkeit durchströmt werden. Damit lässt sich eine kompakte Zurückhaltevorrichtung mit vergleichsweise günstigen Filtermaterialien nutzen, die gewissermaßen nur bei erhöhtem Fremdfluidanteil kurzfristig eingreifen kann, indem die Strömungsgeschwindigkeit reduziert und damit eine Zurückhaltung am Filtermaterial bewirkt wird. Während für das Zurückhalten des Fremdfluids ein Speichern innerhalb des Filtermaterials genügt, kommt es bei einem Abscheiden oder Koaleszieren in der Regel zusätzlich zum Zurückhalten auch zu einer Abführung des Fremdfluids weg vom Filterelement. Je nach Filterelementtyp kann entweder Fremdfluid nur zurückgehalten oder aber zusätzlich auch abgeleitet werden. Varianten der Zurückhaltevorrichtung, die auch ein Ableiten vorsehen, können auch als Abscheidevorrichtung bezeichnet werden.

Die Volumenstromregelvorrichtung weist eine regelbare Pumpe und/oder ein Regelventil auf. Hiermit lässt sich der Volumenstrom bei Bedarf schnell anpassen. Im Betrieb ist die Pumpe und/oder das Regelventil dann geregelt.

Die Regeleinrichtung weist ein Grenzwertstabilisierungsprogramm, insbesondere einen Regelkreis, mit einem oberen Grenzwert für den Anteil an Fremdfluid im Fluid auf. Damit wird solange es der Anteil an Fremdfluid im Fluid zulässt ein hoher Volumenstrom ermöglicht. Die Regeleinrichtung weist ein PID-Regler mit proportionalem, integralem und differentialem Verhalten auf.

In der erfinderischen Ausgestaltung ist der Volumenstrom derart mit der Volumenstromregelvorrichtung in Abhängigkeit von dem mit der Sensoreinrichtung bestimmten Anteil an Fremdfluid im Fluid geregelt, dass er reduziert wird, wenn der Anteil an Fremdfluid im Fluid einen Zielwert überschreitet, und er erhöht wird, wenn der Anteil an Fremdfluid im Fluid einen Zielwert unterschreitet. Optional ist der Zielwert im Rahmen des Grenzwertstabilisierungsprogramms, insbesondere vom Regelkreis, dynamisch definiert.

Des Weiteren sollte das Filterelement derart ausgelegt sein, dass ein Zurückhalten und/oder Abscheiden des Fremdfluids am Filterelement erfolgt. Mit Hilfe eines Filterelements lassen sich nämlich auch sehr feine Dispersionen aufbrechen. Dabei ist zu bevorzugen, dass das Filterelement derart ausgelegt ist, dass das Zurückhalten und/oder die Abscheidung des Fremdfluids am Filterelement bei einem geringeren Volumenstrom höher ist als bei einem höheren Volumenstrom. Derartige Filterelemente erlauben, dass das Zurückhalten und/oder die Abscheidung in hinreichender Höhe erfolgt und gleichzeitig hohe Fördervolumen erreichbar sind.

Bei der erfinderischen Ausgestaltung ist vorgesehen, dass das Filterelement ein Koaleszenzelement oder ein Mikrofilter ist. Hiermit lässt sich das Fremdfluid zurückhalten. Das Filterelement kann eine Koaleszenzeffizienz aufweisen, die bezüglich dem abzuscheidenden Fremdfluid mit dem Volumenstrom des Fluids korreliert, insbesondere derart, dass die Koaleszenzeffizienz steigt, wenn sich der Volumenstrom verringert und die Koaleszenzeffizienz sinkt, wenn sich der Volumenstrom erhöht. Damit lässt sich beispielsweise ein Betankungsvorgang verlangsamen, wenn zu viel Wasser im Kohlenwasserstoff oder Öl enthalten ist, um den Anteil an Wasser durch Steigerung des Zurückhaltens und/oder der Abscheidung auf ein tolerierbares Niveau abzusenken.

Vorzugsweise ist das Filterelement zur Abscheidung von Wasser als Fremdfluid hydrophob und/oder lipophil. Dies erlaubt, dass das Filterelement das Fremdfluid zwar zurückhält, insbesondere beispielsweise Wasser, aber trotzdem nicht bindet, sodass das Fremdfluid abgeleitet werden kann und die Abscheidewirkung über die Lebensdauer des Filterelements hoch bleibt. Alternativ ist das Filterelement vorzugsweise zur Abscheidung von einem Kohlenwasserstoff oder Öl als Fremdfluid hydrophil und/oder lipophob. Damit werden Kohlenwasserstoff oder Öl nicht gebunden und können abgeleitet werden.

In einer abweichenden bevorzugten Ausführungsform ist das Filterelement neutral gegenüber dem Fremdfluid und zur Speicherung des Fremdfluids ausgelegt. Unter neutral sollen insbesondere Filterelemente verstanden werden, die nicht hydrophob und nicht lipophil sind. Derartige neutrale Filterelemente sind besonders preiswert und speichern das Fremdfluid im Inneren. Dabei sollte die Speicherfähigkeit von Fremdfluid in dem Filterelement abhängig von dem Differenzdruck und/oder Volumenstrom über dem Filterelement sein. Als neutrales Filterelement geeignet sind beispielsweise auch Mikrofilter. Eine Regeneration von solchen neutralen Filterelementen kann dann beispielsweise durch Spülen mit erhöhtem Spülvolumenstrom erfolgen. Dann wird das Fremdfluid gewissermaßen ausgewaschen. Der Spülvolumenstrom kann gleichgerichtet zum Strömungsrichtung sein. Entsprechend kann dann eine Anreicherung des Fluids mit dem Fremdfluid erfolgen, wodurch das Filterelement gereinigt wird. Solange hierbei der Grenzwert an Fremdfluid im Fluid nicht überschritten wird, ist dies unkrisch. Optional, insbesondere wenn der Grenzwert überschritten wird, führt man den Spülvolumenstrom einer Abscheidevorrichtung zu, um das Fremdfluid vom Fluid zu trennen. Unbenommen dessen ist auch ein Rückspülvolumenstrom einsetzbar, um den Filter rückwärts freizuspülen. Auch solch ein Rückspülvolumenstrom kann optional einer Abscheidevorrichtung zugeführt werden, um das Fremdfluid vom Fluid zu trennen.

Gemäß einer speziellen Ausführungsform ist die Sensoreinrichtung in Strömungsrichtung vor und/oder hinter dem Filterelement angeordnet, insbesondere zur Bestimmung des Anteils an Fremdfluid im Fluid vor und/oder hinter dem Filterelement. Eine Messstelle vor dem Filterelement ermöglicht ein frühzeitiges Anpassen des Volumenstroms bei Änderungen des Anteils an Fremdfluid vor dem Filterelement. Hinter dem Filterelement lässt sich hingegen korrekt bestimmen, wie hoch der Anteil an Fremdfluid nach dem Zurückhalten und/oder Abscheiden noch ist. Das ist besonders prozesssicher. Durch eine Kombination beider Messstellen lässt sich sowohl frühzeitig eingreifen als auch prozesssicher kontrollieren.

Für eine kompakte Bauweise und ein präzises Regeln des Volumenstroms bietet es sich an, die Sensoreinrichtung in Strömungsrichtung maximal 1 m, vorzugsweise maximal 0,75 m und besonders bevorzugt maximal 0,5 m hinter dem Filterelement anzuordnen, insbesondere zur Bestimmung des Anteils an Fremdfluid im Fluid hinter dem Filterelement.

In einer speziellen Ausgestaltung berücksichtigt die Regeleinrichtung ausschließlich Messwerte einer Sensoreinrichtung, die in Strömungsrichtung hinter dem Filterelement angeordnet ist. Damit ist eine preiswerte Ausgestaltung erreichbar.

Von besonderem Vorteil ist eine Zurückhaltevorrichtung, gemäß der das Fluid mit dem Fremdfluid ein Gemisch, insbesondere eine Dispersion oder Emulsion, aus Kohlenwasserstoff oder Öl und Wasser ist, insbesondere Wasser enthaltend einen Kohlenwasserstoff oder ein Öl, oder ein Kohlenwasserstoff oder Öl enthaltend Wasser.

In einer optionalen Variante ist vorgesehen, dass die Sensoreinrichtung ein Sensorelement zur Bestimmung von freiem Wasser als Fremdfluid in einem Kohlenwasserstoff oder Öl als Hauptbestandteil des Fluids aufweist. Damit können insbesondere Betankungsvorgänge prozesssicher überwacht werden. Dies ist insbesondere in der Luftfahrt aufgrund von gefährlicher Eisbildung im Tank von besonderer Bedeutung. Wie ein derartiger Sensor aufgebaut sein kann, ist beispielsweis in DE 10 2008 056 559 A1 und WO 2007/042501 A1 beschrieben.

Alternativ oder ergänzend kann die Sensoreinrichtung einen Differenzdrucksensor oder zwei oder mehr Drucksensoren zur Bestimmung des Differenzdrucks über dem Filterelement aufweisen. Mit solchen Sensoren ist der Anteil an Fremdfluid im Fluid mit der Sensoreinrichtung mittelbar über den Differenzdruck über dem Filterelement bestimmbar und/oder wird über diesen bestimmt. Außerdem kann die Regeleinrichtung die Sensibilität der Volumenstromregelung in Abhängigkeit von dem Differenzdruck anpassen.

Vorzugsweise weist die Zurückhaltevorrichtung einen Sammelhohlraum im Bereich unterhalb oder oberhalb des Filterelements auf, in dem das aus dem Fluid abzuscheidende Fremdfluid sammelbar ist. Insbesondere sollte der Sammelhohlraum oben angeordnet sein, wenn das Fremdfluid eine geringere Dichte aufweist als das Fluid, und unten angeordnet sein, wenn das Fremdfluid eine höhere Dichte aufweist als das Fluid.

Ein solcher Sammelhohlraum kann eine Vertiefung in der Fluidleitung sein. Vorzugsweise weist der Sammelhohlraum eine Evakuierungsöffnung auf, die insbesondere von der Fluidleitung abzweigt. Damit kann bei Bedarf das Fremdfluid abgelassen werden. Für eine höhere Prozesssicherheit bietet sich eine Ausgestaltung an, bei der dem Sammelhohlraum eine Füllstandssensorik zur Bestimmung des enthaltenen Fremdfluids zugeordnet ist. Dann kann der Sammelhohlraum prozesssicher geleert werden, bevor er überläuft. Ein Sammelhohlraum kann auch als Sammelsumpf bezeichnet werden.

Gemäß einer weiteren Ausgestaltungsvariante ist die Fluidleitung im Bereich des Filterelements von einem Filtergehäuse ausgebildet. Zum Austausch des Filterelements sollte dieses öffenbar ausgebildet sein.

In einer speziellen Ausführungsform weist die Zurückhaltevorrichtung einen Bypass auf, der in Strömungsrichtung vor und hinter dem Filterelement, der Sensoreinrichtung und der Volumenstromregelvorrichtung mit der Fluidleitung verbunden ist, wobei der Bypass in Strömungsrichtung hinter dem Filterelement über ein Bypassventil mit der Fluidleitung verbunden ist. Das Bypassventil sollte in einer ersten Stellung den Bypass sperren und in einer zweiten Stellung das Fluid und Fremdfluid wieder zurück vor das Filterelement leiten. Hierzu sollte das Bypassventil in der zweiten Stellung die Fluidleitung sperren, dies insbesondere hinter dem Filterelement. Hierdurch kann der Anteil an Fremdfluid im Fluid durch mehrmaliges Zurückhalten am Filterelement weiter gesenkt werden.

Die Erfindung betrifft also eine Kraftstoffbetankungsanlage mit einer Zurückhaltevorrichtung wie sie vor- und nachstehend beschrieben ist, wobei die Fluidleitung der Zurückhaltevorrichtung eine Kraftstoffleitung ist. Eine derartige Kraftstoffbetankungsanlage erlaubt bei kompakter Baugröße auch einen mobilen Einsatz, ist kostengünstig und ermöglicht ein prozesssicheres Betanken von Fahrzeugen ohne einen Grenzwert an Fremdfluid im Kraftstoff zu überschreiten. Ein typisches unerwünschtes Fremdfluid ist Wasser.

Die Kraftstoffbetankungsanlage weist vorzugsweise einen Speichertank in Strömungsrichtung vor der Zurückhaltevorrichtung auf. Dies kann ein stationärer Tank, ein Pufferspeicher, ein mobiler Tank oder eine Tankanlage mit Hydranten sein. In Strömungsrichtung hinter der Zurückhaltevorrichtung ist vorzugsweise eine Betankungsöffnung ausgebildet. Diese ist mit einem Fahrzeugtank oder Tankstutzen verbindbar, bzw. in diesen einführbar.

Fernerhin betrifft die Erfindung ein Verfahren, wie definiert in Anspruch 4, zum Zurückhalten eines Fremdfluids aus einem Fluid, wobei ein Volumenstrom des Fluids mit dem Fremdfluid in einer Strömungsrichtung durch ein Filterelement in einer Fluidleitung strömt, bei dem ein Anteil an Fremdfluid im Fluid bestimmt wird, und bei dem eine Anpassung des Volumenstroms in Abhängigkeit des Anteils an Fremdfluid im Fluid erfolgt.

Vorteilhaft an diesem Verfahren ist, dass in Abhängigkeit des Anteils an Fremdfluid im Fluid eine Anpassung des Volumenstroms erfolgt, womit sich ein bei vielen Feinfiltermedien vorhandener Zurückhaltungs- oder Koaleszenzeffekt bei geringer Durchströmung dazu einsetzen lässt, deren zurückhaltende, abscheidende oder koaleszierende Wirkung bei Bedarf ausnutzen. Solange kaum oder kein Fremdfluid enthalten ist, wird auch keine Zurückhaltewirkung benötigt, und das Filterelement kann mit hoher Strömungsgeschwindigkeit durchströmt werden. Damit lässt sich das Verfahren mit einer kompakten Zurückhaltevorrichtung mit vergleichsweise günstigen Filtermaterialien nutzen, die gewissermaßen nur bei erhöhtem Fremdfluidanteil kurzfristig eingreifen kann, indem die Strömungsgeschwindigkeit reduziert und damit ein Zurückhalten am Filtermaterial bewirkt wird.

In einer Verfahrensoption ist vorgesehen, dass die Anpassung des Volumenstroms eine Reduktion ist, wenn der Anteil an Fremdfluid im Fluid einen Zielwert, zum Beispiel den oberen Grenzwert, überschreitet.

Gleichermaßen kann das Verfahren optional so ausgestaltet sein, dass die Anpassung des Volumenstroms eine Erhöhung ist, wenn der Anteil an Fremdfluid im Fluid einen Zielwert, zum Beispiel den oberen Grenzwert, unterschreitet. Dabei kann die Zurückhaltung an Fremdfluid nicht nur gesteigert werden, sondern optional auch ein Freispülen umgesetzt werden, bei dem das Fluid mit im Filterelement gespeichertem Fremdfluid angereichert wird. Hierdurch kann der Filter gereinigt werden, ohne dass ein Grenzwert an Fremdfluid im Fluid überschritten wird. Bei hoher Strömungsgeschwindigkeit lassen sich Tropfen von Fremdfluid im Filterelement nämlich in Teiltropfen aufbrechen, die dann durch das Filterelement hindurch gelangen können.

Vorzugsweise sollte der Volumenstrom maximal auf einen Maximalwert erhöht werden. Damit wird verhindert, dass das Filterelement beschädigt wird und nachfolgende Stationen mit zu viel Fluid versorgt werden. Außerdem genügt eine kleine Pumpe mit entsprechend begrenzter Maximalleistung.

Gemäß einer Verfahrensausgestaltung ist vorgesehen, dass die Anpassung des Volumenstroms eine Unterbrechung ist, wenn der Anteil an Fremdfluid im Fluid einen Sicherheitswert überschreitet. Damit kann bei einem übermäßig hohen Fremdfluidanteil ein Notstopp genutzt werden, um der Ursache auf den Grund zu gehen. Außerdem wird eine Überlastung der Zurückhaltewirkung des Filterelements verhindert. Der Sicherheitswert sollte höher sein als der optionale obere Grenzwert.

Die Anpassung des Volumenstroms erfolgt mittels Regelung einer regelbaren Pumpe und/oder eines Regelventils. Dies ist einfach in der Handhabung und sollte automatisiert erfolgen.

Gemäß einer näheren Verfahrensoption erfolgt die Bestimmung des Anteils an Fremdfluid im Fluid vor und/oder hinter dem Filterelement. Eine Messung vor dem Filterelement ermöglicht ein frühzeitiges Anpassen des Volumenstroms bei Änderungen des Anteils an Fremdfluid vor dem Filter. Hinter dem Filterelement lässt sich hingegen korrekt bestimmen, wie hoch der Anteil an Fremdfluid nach dem Zurückhalten noch ist, woraus sich eine hohe Prozesssicherheit ergibt. Durch Kombination beider Messungen lässt sich sowohl frühzeitig eingreifen als auch prozesssicher kontrollieren. Preiswert umsetzbar ist insbesondere eine Variante, bei der das Verfahren ausschließlich eine Messung hinter dem Filterelement nutzt.

In einer möglichen Verfahrensumsetzung ist vorgesehen, dass das Fluid mit dem Fremdfluid ein Gemisch aus Kohlenwasserstoff oder Öl und Wasser ist, insbesondere Wasser enthaltend einen Kohlenwasserstoff oder ein Öl, oder ein Kohlenwasserstoff oder Öl enthaltend Wasser. Damit wird entweder Wasser abgeschieden, womit sich insbesondere Antriebe und Tanks schützen lassen. Umgekehrt ist das Zurückhalten und/oder Abscheiden von Kohlenwasserstoff oder Öl aus Wasser besonders wichtig für eine hohe Umweltfreundlichkeit. Besonders vorteilhaft erfolgt das Verfahren bei Anwendungen, bei denen der Hauptbestandteil des Fluids ein Kohlenwasserstoff oder Öl und das Fremdfluid freies Wasser ist. Damit lassen sich Betankungsvorgänge überwachen.

In einer speziellen Anwendung des Verfahrens wird das Fluid hinter dem Filterelement in einen Tank eines Fahrzeugs, vorzugsweise eines Flugzeugs, eingeleitet. Durch das Verfahren lässt sich eine sichere Betankung erreichen, sodass beispielsweise kein Eis in dem Tank entsteht, das anderenfalls zu einem Versorgungsmangel des Antriebs, Sensorfehlern, Sensorschäden und Tankhüllenschäden führen könnte.

Optional ergänzend oder alternativ erfolgt die Anpassung des Volumenstroms in Abhängigkeit von einem Differenzdruck über dem Filterelement. Mit einer solchen Differenzdruckbestimmung ist der Anteil an Fremdfluid im Fluid bestimmbar. Daher ist ein Einsatz ohne andere Sensoren durchaus möglich. Außerdem kann die Sensibilität der Volumenstromregelung in Abhängigkeit von dem Differenzdruck angepasst werden. Das ist insbesondere mit Blick auf eine sich ändernde Zurückhalteeffizienz und/oder Koaleszenzeffizienz des Filterelements bei zunehmender Schmutzsättigung hilfreich, um möglichst exakt auf einen Zielwert zu regeln.

Gemäß einer speziellen Verfahrensausgestaltung ist vorgesehen, dass eine Sättigung des Filterelements mit Fremdfluid dadurch reduziert wird, dass das Filterelement mit einem erhöhten Spülvolumenstrom freigespült wird, dies vorzugsweise in der gleichen Richtung wie es zuvor durchströmt wurde. Hierdurch lässt sich das Filterelement regenerieren, insbesondere ohne ausgebaut oder gar ausgetauscht werden zu müssen. Besondere Bedeutung kommt diesem Spülen bei Filterelementen zu, die neutral gegenüber dem Fremdfluid sind. Der Spülvolumenstrom sollte insbesondere höher sein als der Volumenstrom, der in Abhängigkeit des Anteils an Fremdfluid im Fluid zum Zurückhalten des Fremdfluids genutzt würde. Spülvorgänge können regelmäßig durchgeführt werden. Alternativ kann die Sättigung des Filterelements mit Fremdfluid überwacht werden, beispielsweise durch eine Differenzdruckbestimmung über dem Filterelement. Spülvorgänge können dann bedarfsgerecht veranlasst werden, wenn eine Sättigungsgrenze überschritten wird. Der Spülvolumenstrom sollte nach Möglichkeit aus dem regulären Kreislauf abgeleitet werden, beispielsweise zu einer separaten Abscheidevorrichtung.

Das Verfahren wird vorzugsweise mit einer Zurückhaltevorrichtung ausgeführt, wie sie vor- und nachstehend beschrieben ist.

Es wird darauf hingewiesen, dass sich die Zurückhaltevorrichtung bei einem Abscheiden von Fremdfluid auch als Abscheidevorrichtung oder Abscheider, die Volumenstromregelvorrichtung als Volumenstromregler, die Sensoreinrichtung als Sensor und die Regeleinrichtung als Regler bezeichnen lassen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Schemaskizze einer Zurückhaltevorrichtung; und
- Fig. 2: ein Diagramm, bei dem der Anteil an Fremdfluid und der Volumenstrom über einem Zeitabschnitt dargestellt sind.

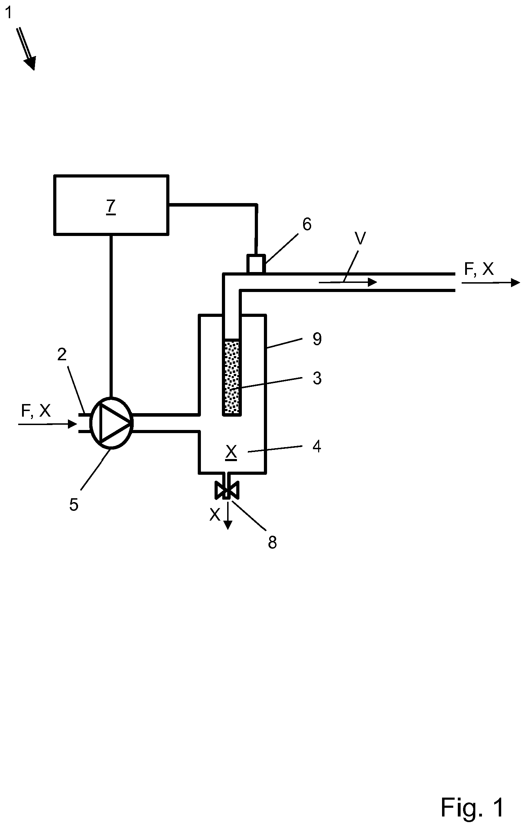

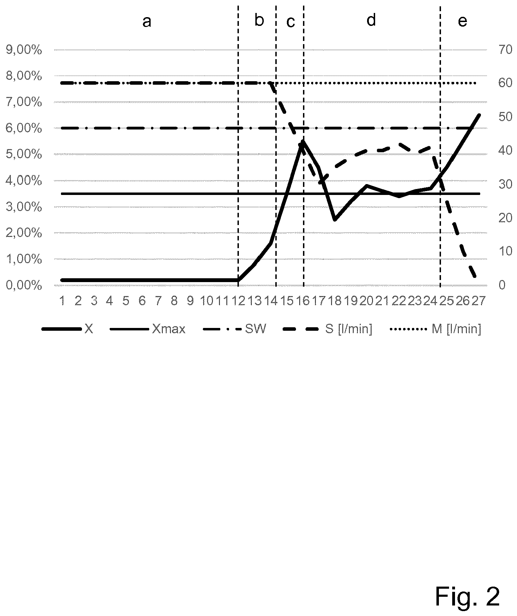

Fig. 1 zeigt eine Schemaskizze einer Zurückhaltevorrichtung 1, die ein Filterelement 3 in einer Fluidleitung 2 aufweist. Die Fluidleitung 2 und das Filterelement 3 werden in einer Strömungsrichtung V von einem Fluid F enthaltend ein Fremdfluid X durchströmt. Mit Hilfe einer Volumenstromregelvorrichtung 5, nämlich einer regelbaren Pumpe, wird der Volumenstrom (siehe Bezugsziffer S in Fig. 2) durch die Fluidleitung 2 geregelt. Die regelbare Pumpe sitzt insbesondere vor dem Filterelement 3 in der Fluidleitung 2. Im Bereich um das Filterelement 3 ist die Fluidleitung 2 von einem Filtergehäuse 9 ausgebildet. Das Filterelement 3 wird hier von außen nach innen durchströmt.

Im unteren Bereich des Filtergehäuses 9, das heißt im Bereich unterhalb des Filterelements 3, ist ein Sammelhohlraum 4 ausgebildet, in dem sich aus dem Fluid F abgeschiedenes Fremdfluid X sammeln kann. Es handelt sich gewissermaßen um eine Vertiefung in der Fluidleitung 2, die auch als Sammelsumpf bezeichnet werden kann. Der Sammelhohlraum 4 weist eine Evakuierungsöffnung 8 auf, die von der Fluidleitung 2 abzweigt. Mit Hilfe eines Evakuierungsventils in der Evakuierungsöffnung 8 lässt sich gesammeltes Fremdfluid X aus dem Sammelhohlraum 4 ablassen. Optional kann dem Sammelhohlraum 4 eine Füllstandssensorik zur Bestimmung der Menge an enthaltenem Fremdfluid X zugeordnet sein. Hiermit lässt sich dann entweder ein Alarmsignal zur manuellen Evakuierung des Sammelhohlraums 4 ausgeben, oder aber automatisiert das Evakuierungsventil ansteuern.

Das Filterelement 3 ist derart ausgelegt, dass eine Abscheidung des Fremdfluids X am Filterelement 3 erfolgt. Im Besonderen ist die Abscheidung des Fremdfluids X am Filterelement 3 bei einem geringen Volumenstrom höher als bei einem hohen Volumenstrom. Das Filterelement 3 weist eine Koaleszenzeffizienz auf, die bezüglich dem abzuscheidenden Fremdfluid X mit dem Volumenstrom des Fluids F in der Form korreliert, dass die Koaleszenzeffizienz steigt, wenn sich der Volumenstrom verringert und die Koaleszenzeffizienz sinkt, wenn sich der Volumenstrom erhöht. Es eignen sich hierzu insbesondere Koaleszenzelemente oder Mikrofilter als Filterelement 3.

Damit lässt sich beispielsweise ein Betankungsvorgang verlangsamen, wenn zu viel Wasser als Fremdfluid X in Kohlenwasserstoff oder Öl als Fluid F enthalten ist, um den Anteil durch Steigerung der Abscheidung auf ein tolerierbares Niveau abzusenken. Hierzu sollte das Filterelement 3 hydrophob oder lipophil sein.

Alternativ kann auch ein Filterelement eingesetzt werden, das neutral und zur Speicherung des Fremdfluids ausgelegt ist. Hierzu kann es auch nicht hydrophob und nicht lipophil ausgebildet sein. Weil derartige neutrale Filterelemente keine Ableitung des Fremdfluids aufweisen, kann der Sammelsumpf und die Evakuierungsöffnung entfallen.

Zur Ausnutzung der variablen Koaleszenzeffizienz bei unterschiedlichen Volumenströmen weist die gezeigte Variante der Zurückhaltevorrichtung 1 eine Sensoreinrichtung 6 auf, mit welcher der Anteil an Fremdfluid X im Fluid F bestimmbar ist. Die Sensoreinrichtung 6 bzw. deren Messstelle ist in Strömungsrichtung V hinter dem Filterelement 3 angeordnet, insbesondere zur Bestimmung des Anteils an Fremdfluid X im Fluid F hinter dem Filterelement 3. Dabei liegt die Sensoreinrichtung 6 in Strömungsrichtung V vorzugsweise maximal 1 m, vorzugsweise maximal 0,75 m und besonders bevorzugt maximal 0,5 m hinter dem Filterelement 3. Alternativ oder ergänzend ist auch eine Anordnung einer Sensoreinrichtung 6 bzw. einer Messstelle in Strömungsrichtung V vor dem Filterelement 3 möglich, insbesondere zur Bestimmung des Anteils an Fremdfluid X im Fluid F vor dem Filterelement 3.

Bei einer möglichen Anwendung zum Abscheiden von Wasser aus einem Kohlenwasserstoff oder Öl sollte die Sensoreinrichtung 6 ein Sensorelement zur Bestimmung von freiem Wasser als Fremdfluid X in einem Kohlenwasserstoff oder Öl als Hauptbestandteil des Fluids F aufweisen.

Außerdem verfügt die Zurückhaltevorrichtung 1 zur Ausnutzung der variablen Koaleszenzeffizienz bei unterschiedlichen Volumenströmen über eine Regeleinrichtung 7, mit welcher bzw. mit deren Regelkreis der Volumenstrom mit der Volumenstromregelvorrichtung 5, nämlich der regelbaren Pumpe, in Abhängigkeit von dem mit der Sensoreinrichtung 6 bestimmten Anteil an Fremdfluid X im Fluid F geregelt ist. Die Regelvorrichtung 7 weist hierzu ein Grenzwertstabilisierungsprogramm (hierbei handelt es sich um einen Regelkreis) mit einem oberen Grenzwert (siehe Bezugsziffer Xmax in Fig. 2) für den Anteil an Fremdfluid X im Fluid F auf. Bis zu diesem oberen Grenzwert ist der Anteil an Fremdfluid X im Fluid F unkritisch.

Verfahrenstechnisch lässt sich jetzt der Anteil an Fremdfluid X im Fluid F bestimmen und der Volumenstrom in Abhängigkeit des Anteils an Fremdfluid X im Fluid F derart anpassen, dass auf den oberen Grenzwert geregelt wird, sollte dieser ohne Regelung überstiegen werden. Die Anpassung des Volumenstroms ist eine Reduktion, wenn der Anteil an Fremdfluid X im Fluid F den oberen Grenzwert Xmax überschreitet, und eine Erhöhung, wenn der Anteil an Fremdfluid X im Fluid F den oberen Grenzwert Xmax unterschreitet. Der Volumenstrom wird jedoch maximal auf einen Maximalwert (siehe Bezugsziffer M in Fig. 2) erhöht.

Zusätzlich sollte das Grenzwertstabilisierungsprogramm einen Sicherheitswert (siehe Bezugsziffer SW in Fig. 2) aufweisen. Sollte dieser trotz der Bemühung auf den oberen Grenzwert (siehe Bezugsziffer Xmax in Fig. 2) zu regeln überschritten werden, lässt sich die Volumenstromregelvorrichtung 5 und damit der Volumenstrom (siehe Bezugsziffer S in Fig. 2) komplett stoppen. Hierzu sollte der Sicherheitswert größer sein als der obere Grenzwert.

Eine derartige Zurückhaltevorrichtung 1 ist Teil einer Kraftstoffbetankungsanlage, sodass die Fluidleitung 2 der Zurückhaltevorrichtung 1 eine Kraftstoffleitung ist, die in Strömungsrichtung V hinter dem Filterelement 3 und der Sensoreinrichtung 6 über eine Betankungsöffnung in einen Tank eines Fahrzeugs ausmünden kann. Auf der in Strömungsrichtung V aufwärts liegenden Seite kann ein Speichertank vorgesehen sein.

Alternativ oder ergänzend kann die Anpassung des Volumenstroms S in Abhängigkeit von einem Differenzdruck über dem Filterelement 3 erfolgen. Der Differenzdruck wäre hierzu mittels einem Differenzdrucksensor oder zwei oder mehr Drucksensoren zu bestimmen und der Regeleinrichtung 7 und/oder dem Grenzwertstabilisierungsprogramm zu übermitteln.

In **Fig. 2** ist schematisch in einem Diagramm dargestellt, wie sich der Anteil an Fremdfluid X im Fluid F und der Volumenstrom S über einem Zeitabschnitt von 27 Zeiteinheiten entwickeln können. In einem ersten Zeitabschnitt a von 0 bis 12 Zeiteinheiten ist der Anteil an Fremdfluid X im Fluid F nahezu null und die Volumenstromregelvorrichtung 5 sorgt für einen Volumenstrom S in Höhe eines Maximalwertes M.

Im Zeitabschnitt b zwischen 12 und 14 Zeiteinheiten steigt der Anteil an Fremdfluid F im Fluid X an, liegt jedoch noch deutlich unterhalb des oberen Grenzwertes Xmax. Daher sorgt die Volumenstromregelvorrichtung 5 weiterhin für einen Volumenstrom S in Höhe des Maximalwertes M.

Dann realisiert die Regeleinrichtung 7 in Zeitabschnitt c zwischen 14 und 16 Zeiteinheiten, dass der Anteil an Fremdfluid X derart schnell weiter ansteigt, dass dieser droht den oberen Grenzwert Xmax in Höhe von 3,5 % zu übersteigen. Die Regeleinrichtung 7 greift daher ein und steuert durch eine Drosselung des Volumenstroms S gegen.

Anschließend wird in Zeitabschnitt d zwischen 16 und 25 Zeiteinheiten zunächst der Anteil an Fremdfluid X durch Anpassungen des Volumenstroms S auf das Niveau des oberen Grenzwertes Xmax stabilisiert.

Schließlich steigt in Zeitabschnitt e zwischen 25 und 27 Zeiteinheiten der Anteil an Fremdfluid X im Fluid F trotz massiver Absenkung des Volumenstroms S über den Sicherheitswert SW in Höhe von 6,0 % und die Volumenstromregelvorrichtung 5 wird abgeschaltet.

Alternativ wäre es in solch einem Fall auch möglich, den Volumenstrom S über einen ventilgesteuerten Bypass zurück vor das Filterelement 3 zu leiten. Hierdurch ließe sich der Anteil an Fremdfluid X im Fluid F durch eine weitere Abscheidung weiter absenken.

### Bezugszeichenliste

| | | | |
|---|---|---|---|
| 1 | Zu rückhaltevorrichtung | F | Fluid |
| 2 | Fluidleitung | M | Maximalwert |
| 3 | Filterelement | S | Volumenstrom |
| 4 | Sammelhohlraum | SW | Sicherheitswert |
| 5 | Volumenstromregelvorrichtung | V | Strömungsrichtung |
| 6 | Sensoreinrichtung | X | Fremdfluid |
| 7 | Regeleinrichtung | Xmax | oberer Grenzwert |
| 8 | Evakuierungsöffnung | | |
| 9 | Filtergehäuse | | |

## Patentansprüche

1. **Kraftstoffbetankungsanlage** mit einer **Zurückhaltevorrichtung** (1) mit
- einem Filterelement (3) in einer Fluidleitung (2),
∘ wobei die Fluidleitung (2) der Zurückhaltevorrichtung (1) eine Kraftstoffleitung ist,
∘ wobei die Fluidleitung (2) in einer Strömungsrichtung (V) von einem Fluid (F) enthaltend ein Fremdfluid (X) durchströmbar ist, und
∘ wobei das Filterelement (3) ein Koaleszenzelement oder ein Mikrofilter und derart ausgelegt ist, dass ein Zurückhalten und/oder Abscheiden des Fremdfluids (X) am Filterelement (3) erfolgt,
- einer Volumenstromregelvorrichtung (5) aufweisend eine regelbare Pumpe und/oder ein Regelventil, wobei mit der Volumenstromregelvorrichtung (5) der Volumenstrom (S) durch die Fluidleitung (2) regelbar ist,
- einer Sensoreinrichtung (6), mit welcher der Anteil an Fremdfluid (X) im Fluid (F) bestimmbar ist,
∘ wobei die Sensoreinrichtung (6) ein Sensorelement zur Bestimmung von freiem Wasser als Fremdfluid (X) in einem Kohlenwasserstoff oder Öl als Hauptbestandteil des Fluids (F) aufweist, und
- einer Regeleinrichtung (7), mit welcher der Volumenstrom (S) mit der Volumenstromregelvorrichtung (5) in Abhängigkeit von dem mit der Sensoreinrichtung (6) bestimmten Anteil an Fremdfluid (X) im Fluid (F) regelbar ist,
**dadurch gekennzeichnet, dass**
- die Regeleinrichtung (7) ein Grenzwertstabilisierungsprogramm, nämlich einen Regelkreis, mit einem oberen Grenzwert (Xmax) für den Anteil an Fremdfluid (X) im Fluid (F) aufweist, wobei die Regeleinrichtung (7) einen PID-Regler mit proportionalem, integralem und differentialem Verhalten aufweist;
- der Volumenstrom (S) derart mit der Volumenstromregelvorrichtung (5) in Abhängigkeit von dem mit der Sensoreinrichtung (6) bestimmten Anteil an Fremdfluid (X) im Fluid (F) geregelt ist, dass
∘ er reduziert wird, wenn der Anteil an Fremdfluid (X) im Fluid (F) einen Zielwert überschreitet, und
∘ er erhöht wird, wenn der Anteil an Fremdfluid (X) im Fluid (F) einen Zielwert unterschreitet.

2. Kraftstoffbetankungsanlage mit einer Zurückhaltevorrichtung (1) nach Anspruch 1, **dadurch gekennzeichnet, dass** das Filterelement (3) zur Abscheidung von Wasser als Fremdfluid (X) hydrophob und/oder lipophil ist.

3. Kraftstoffbetankungsanlage mit einer Zurückhaltevorrichtung (1) nach einem der Ansprüche 1 oder 2, **dadurch gekennzeichnet, dass** die Sensoreinrichtung (6) in Strömungsrichtung (V) vor und/oder hinter dem Filterelement (3) angeordnet ist.

4. **Verfahren** zum Zurückhalten eines Fremdfluids (X) aus einem Fluid (F) mit einer Kraftstoffbetankungsanlage mit einer Zurückhaltevorrichtung nach einem der Ansprüche 1 bis 3, wobei ein Volumenstrom (S) des Fluids (F) mit dem Fremdfluid (X) in der Strömungsrichtung (V) durch das Filterelement (3) in der Fluidleitung (2) strömt, und bei dem die folgenden Schritte ausgeführt werden:
a) Bestimmen des Anteils an Fremdfluid (X) im Fluid (F);
b) Anpassung des Volumenstroms (S) in Abhängigkeit des Anteils an Fremdfluid (X) im Fluid (F),
- wobei die Anpassung des Volumenstroms (S) eine Erhöhung ist, wenn der Anteil an Fremdfluid (X) im Fluid (F) einen Zielwert unterschreitet, und
- wobei die Anpassung des Volumenstroms (S) eine Reduktion ist, wenn der Anteil an Fremdfluid (X) im Fluid (F) einen Zielwert überschreitet.

5. Verfahren nach Anspruch 4, wobei der Volumenstrom (S) maximal auf einen Maximalwert (M) erhöht wird.

6. Verfahren nach einem der Ansprüche 4 oder 5, wobei die Anpassung des Volumenstroms (S) eine Unterbrechung ist, wenn der Anteil an Fremdfluid (X) im Fluid (F) einen Sicherheitswert (SW) überschreitet.

7. Verfahren nach einem der Ansprüche 4 bis 6, wobei das Fluid (F) hinter dem Filterelement (3) in einen Tank eines Fahrzeugs eingeleitet wird.

8. Verfahren nach einem der Ansprüche 4 bis 7, wobei die Anpassung des Volumenstroms (S) in Abhängigkeit von einem Differenzdruck über dem Filterelement (3) erfolgt.

9. Verfahren nach einem der Ansprüche 4 bis 8, wobei eine Sättigung des Filterelements (3) mit Fremdfluid (X) dadurch reduziert wird, dass das Filterelement (3) mit einem erhöhten Spülvolumenstrom freigespült wird.

## Claims

1. Fuel tank filling installation having a retaining apparatus (1) comprising
- a filter element (3) in a fluid line (2),
∘ wherein the fluid line (2) of the retaining apparatus (1) is a fuel line,
∘ wherein a fluid (F) containing a foreign fluid (X) can flow through the fluid line (2) in a flow direction (V), and
∘ wherein the filter element (3) is a coalescence element or a microfilter and is designed in such a way that retention and/or separation of the foreign fluid (X) occurs at the filter element (3),
- a volume flow control device (5) having a controllable pump and/or a control valve, wherein the volume flow (S) through the fluid line (2) can be controlled by way of the volume flow control device (5),
- a sensor device (6) by way of which the fraction of foreign fluid (X) in the fluid (F) can be determined,
∘ wherein the sensor device (6) has a sensor element for determining free water as foreign fluid (X) in a hydrocarbon or oil as main constituent of the fluid (F), and
- a control device (7) by way of which the volume flow (S) can be controlled by way of the volume flow control device (5) in a manner dependent on the fraction of foreign fluid (X) in the fluid (F) as determined by way of the sensor device (6),
**characterized in that**
- the control device (7) has a limit value stabilizing program, specifically a control loop, with an upper limit value (Xmax) for the fraction of foreign fluid (X) in the fluid (F), wherein the control device (7) has a PID controller with proportional, integral and differential behaviour;
- the volume flow (S) is controlled by way of the volume flow control device (5) in a manner dependent on the fraction of foreign fluid (X) in the fluid (F) as determined by way of the sensor device (6) in such a way that
∘ it is reduced if the fraction of foreign fluid (X) in the fluid (F) overshoots a target value, and
∘ it is increased if the fraction of foreign fluid (X) in the fluid (F) undershoots a target value.

2. Fuel tank filling installation having a retaining apparatus (1) according to Claim 1, **characterized in that** the filter element (3) is hydrophobic and/or lipophilic for the separation of water as foreign fluid (X).

3. Fuel tank filling installation having a retaining apparatus (1) according to either of Claims 1 and 2, **characterized in that** the sensor device (6) is arranged upstream and/or downstream of the filter element (3) in the flow direction (V).

4. Method for retaining a foreign fluid (X) from a fluid (F) by way of a fuel tank filling installation having a retaining apparatus according to any of Claims 1 to 3, wherein a volume flow (S) of the fluid (F) comprising the foreign fluid (X) flows through the filter element (3) in the fluid line (2) in the flow direction (V), and in which method the following steps are performed:
a) determining the fraction of foreign fluid (X) in the fluid (F);
b) adjusting the volume flow (S) in a manner dependent on the fraction of foreign fluid (X) in the fluid (F),
- wherein the adjustment of the volume flow (S) is an increase if the fraction of foreign fluid (X) in the fluid (F) undershoots a target value, and
- wherein the adjustment of the volume flow (S) is a reduction if the fraction of foreign fluid (X) in the fluid (F) overshoots a target value.

5. Method according to Claim 4, wherein the volume flow (S) is increased at most to a maximum value (M).

6. Method according to either of Claims 4 and 5, wherein the adjustment of the volume flow (S) is an interruption if the fraction of foreign fluid (X) in the fluid (F) overshoots a safety value (SW).

7. Method according to any of Claims 4 to 6, wherein the fluid (F) is introduced, downstream of the filter element (3), into a tank of a vehicle.

8. Method according to any of Claims 4 to 7, wherein the adjustment of the volume flow (S) is performed in a manner dependent on a pressure difference across the filter element (3).

9. Method according to any of Claims 4 to 8, wherein a saturation of the filter element (3) with foreign fluid (X) is reduced by virtue of the filter element (3) being purged with an increased flushing volume flow.

## Revendications

1. Installation de ravitaillement en carburant comprenant un dispositif de retenue (1) pourvu
- d'un élément filtrant (3) situé dans une conduite de fluide (2),
∘ la conduite de fluide (2) du dispositif de retenue (1) étant une conduite de carburant,
∘ un fluide (F) contenant un fluide étranger (X) pouvant s'écouler à travers la conduite de fluide (2) dans un sens d'écoulement (V), et
∘ l'élément filtrant (3) étant un élément à coalescence ou un micro-filtre et étant conçu de manière à ce que le fluide étranger (X) soit retenu et/ou séparé au niveau de l'élément filtrant (3),
- d'un dispositif de régulation de débit volumique (5) comportant une pompe régulable et/ou une vanne de régulation, le débit volumique (S) à travers la conduite de fluide (2) pouvant être régulé à l'aide du dispositif de régulation de débit volumique (5),
- d'un module de détection (6) permettant de déterminer la proportion de fluide étranger (X) dans le fluide (F),
∘ le module de détection (6) comportant un élément de détection destiné à déterminer l'eau libre comme fluide étranger (X) dans un hydrocarbure ou une huile comme composant principal du fluide (F), et
- d'un dispositif de régulation (7) permettant de réguler le débit volumique (S) au moyen du dispositif de régulation de débit volumique (5) en fonction de la proportion de fluide étranger (X) dans le fluide (F) qui est déterminée avec le module de détection (6),
**caractérisée en ce que**
- le module de régulation (7) comporte un programme de stabilisation de valeur limite, à savoir une boucle de régulation, avec une valeur limite supérieure (Xmax) de la proportion de fluide étranger (X) dans le fluide (F), le module de régulation (7) comportant un régulateur PID à comportement proportionnel, intégral et différentiel ;
- le débit volumique (S) est régulé avec le dispositif de régulation de débit volumique (5) en fonction de la proportion de fluide étranger (X) dans le fluide (F) qui est déterminée avec le module de détection (6) de manière à être
∘ réduit lorsque la proportion de fluide étranger (X) dans le fluide (F) devient supérieure à une valeur cible, et
∘ augmenté lorsque la proportion de fluide étranger (X) dans le fluide (F) devient inférieure à une valeur cible.

2. Installation de ravitaillement en carburant comprenant un dispositif de retenue (1) selon la revendication 1, **caractérisée en ce que** l'élément filtrant (3) destiné à séparer l'eau du fluide étranger (X) est hydrophobe et/ou lipophile.

3. Installation de ravitaillement en carburant comprenant un dispositif de retenue (1) selon l'une des revendications 1 ou 2, **caractérisée en ce que** le module de détection (6) est disposé en avant et/ou en arrière de l'élément filtrant (3) dans le sens d'écoulement (V) .

4. Procédé de retenue d'un fluide étranger (X) d'un fluide (F) à l'aide d'une installation de ravitaillement en carburant comprenant un dispositif de retenue selon l'une des revendications 1 à 3, un débit volumique (S) du fluide (F) qui contient le fluide étranger (X) s'écoulant dans le sens d'écoulement (V) à travers l'élément filtrant (3) situé dans la conduite de fluide (2), et les étapes suivantes étant réalisées :
a) déterminer la proportion de fluide étranger (X) dans le fluide (F) ;
b) adapter le débit volumique (S) en fonction de la proportion de fluide étranger (X) dans le fluide (F),
- l'adaptation du débit volumique (S) étant une augmentation lorsque la proportion de fluide étranger (X) dans le fluide (F) devient inférieure à une valeur cible, et
- l'adaptation du débit volumique (S) étant une réduction lorsque la proportion de fluide étranger (X) dans le fluide (F) devient supérieure à une valeur cible.

5. Procédé selon la revendication 4, le débit volumique (S) étant augmenté au maximum jusqu'à une valeur maximale (M).

6. Procédé selon l'une des revendications 4 ou 5, l'adaptation du débit volumique (S) étant une interruption lorsque la proportion de fluide étranger (X) dans le fluide (F) devient supérieure à une valeur de sécurité (SW).

7. Procédé selon l'une des revendications 4 à 6, le fluide (F) étant introduit dans un réservoir d'un véhicule en arrière de l'élément filtrant (3).

8. Procédé selon l'une des revendications 4 à 7, l'adaptation du débit volumique (S) étant effectuée en fonction d'une pression différentielle aux bornes de l'élément filtrant (3).

9. Procédé selon l'une des revendications 4 à 8, la saturation de l'élément filtrant (3) avec un fluide étranger (X) étant réduite par rinçage de l'élément filtrant (3) avec un débit volumique de rinçage augmenté.
